# EUROPÄISCHE PATENTSCHRIFT

(11) **EP 2 952 790 B1**
(45) Veröffentlichungstag und Bekanntmachung des Hinweises auf die Patenterteilung: **22.11.2017**
(21) Anmeldenummer: 15165691.5
(22) Anmeldetag: 29.04.2015
(51) Int. Cl.: F16K 7/12, F16K 27/02

(54) **ZWISCHENSTÜCK FÜR EIN ABSPERRORGAN**
INTERMEDIATE PIECE FOR A VALVE
PIÈCE INTERMÉDIAIRE POUR UNE VANNE

(30) Priorität: 02.06.2014 DE 102014210353
(43) Veröffentlichungstag der Anmeldung: 09.12.2015
(73) Patentinhaber: Gemü Gebr. Müller Apparatebau GmbH & Co. Kommanditgesellschaft, 74653 Ingelfingen (DE)
(72) Erfinder: Steigert, Jochen, 6003 Luzern (CH); Schuler, Zeno, 5614 Sarmenstorf (CH)
(74) Vertreter: DREISS Patentanwälte PartG mbB

(56) Entgegenhaltungen:
- EP-A2- 2 843 279
- DE-A1-102011 080 139
- JP-A- 2004 324 661

## Beschreibung

Die Erfindung betrifft ein Zwischenstück für ein Absperrorgan nach dem Oberbegriff des Anspruchs 1.

Sogenannte Membranventile, bei denen ein Antriebsbereich mittels einer Membran von einem fluidführenden Bereich abgetrennt wird, sind bekannt.

So zeigt die DE 10 2011 080 139 A1 ein Membranventil für fluide Medien. Ein Verbindungsstück ist durch einen Antrieb betätigbar und zur Beaufschlagung der Membran ausgebildet. Ein Bereich des Verbindungsstücks weist Rastzapfen zur Befestigung des Verbindungsstücks am Antrieb auf. Die Rastzapfen sind axial geschlitzt und als Hohlzapfen ausgebildet, sodass der Rastzapfen wenigstens zwei axiale Finger mit der radial abragenden Rastnase aufweist.

Aus der EP 0 897 076 A1 ist ein Membranventil bekannt, bei dem ein Membranhalter unabhängig von der Position einer Druckspindel einbau- bzw. austauschbar ist. Zur Kupplung der Druckspindel mit dem Membranhalter ist eine Ausnehmung im Membranhalter vorgesehen, so dass ein freies Ende der Druckspindel zur Bildung einer Nut/Federverbindung seitlich in eine Nut eingesetzt werden kann. Anschließend wird durch ein Überstülpen des Druckstücks die radiale Verschiebung des Membranhalters verriegelt.

Aus der DE 10 2008 045 857 A1 ist ein Membranventil bekannt, bei dem ein Ventilkörper, eine Dichtmembran und ein Verbindungsstück fest miteinander zu einer abgedichteten und einem Antrieb verbindbaren Ventilkörpereinheit verbunden sind.

Aufgabe der Erfindung ist es, einen Wechsel eines Verschlusselements für ein Absperrorgan zu vereinfachen.

Aus der JP 2004 324661 A ist ein Handventil bekannt, bei dem eine Membran an einer Ventilspindel angeordnet ist.

Aus der EP 2 843 279 A2 (Dokument, das unter Art. 54 (3) EPÜ fällt) ist ein Verschlusselement für ein Absperrorgan für Fluide bekannt, wobei das Verschlusselement eine Membran und ein von der Membran abragendes Verriegelungsglied umfasst. Das Verriegelungsglied weist einen Außendurchmesserrücksprung auf, der derart ausgestaltet ist, so dass das Verschlusselement mittels dem Außendurchmesserrücksprung im Wesentlichen orthogonal zu einer Zustellachse zuführbarer Verriegelungsschieber verriegelbar ist.

Die der Erfindung zu Grunde liegende Aufgabe wird durch ein Zwischenstück nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale in Alleinstellung als auch in unterschiedlichen Kombinationen für die Erfindung wichtig sein können, ohne dass hierauf nochmals explizit hingewiesen wird.

Dadurch, dass das Zwischenstück einen Zylinder aufweist, in dem ein Druckstück mit den Verriegelungsschiebern axial führbar ist, kann auf einfache Art und Weise ein kostengünstiges Zwischenstück bereitgestellt werden, mit dem der Wechsel eines Verschlusselements ermöglicht wird. Durch eine Ausnehmung des Zwischenstücks, die derart angeordnet ist, dass in einer Montageposition des Druckstücks sich die Verriegelungsschieber in die Ausnehmung verlagern und damit das Verriegelungsglied freigeben, wird es möglich, das Verriegelungsglied axial von dem Druckstück zu entfernen und ein neues Verschlusselement mit dem Verriegelungselement an dem Druckstück zu befestigen.

Vorteilhaft lässt sich die Montageposition des Druckstücks entlang der Zustellachse erreichen. Dadurch sind keine weiteren mechanischen Bauteile notwendig, sondern es kann der Antrieb für das Absperrorgan dazu verwendet werden, um die Montageposition zu erreichen.

Ein weiterer Vorteil ergibt sich für eine an dem Verschlusselement angeordnete Membran, die in der Montageposition im Wesentlichen nicht gespannt ist, wodurch sich die Montage eines neuen Verschlusselements verbessert.

Nachfolgend werden beispielhafte Ausführungsformen der Erfindung unter Bezugnahme auf die Zeichnung erläutert. In der Zeichnung zeigen:
- Figur 1: ein Zwischenstück in einer schematischen Schnittansicht;
- Figur 2: ein Absperrorgan in einer schematischen Seiten-/Schnittansicht;
- Figur 3: eine perspektivische Darstellung eines Verschlusselements;
- Figur 4: eine schematische Schnittdarstellung des Verschluss-elements;
- Figur 5: einen Ausschnitt aus Figur 2;
- Figur 6: eine schematisch Schnittansicht betreffend einen Montageschritt für das Verschlusselement.

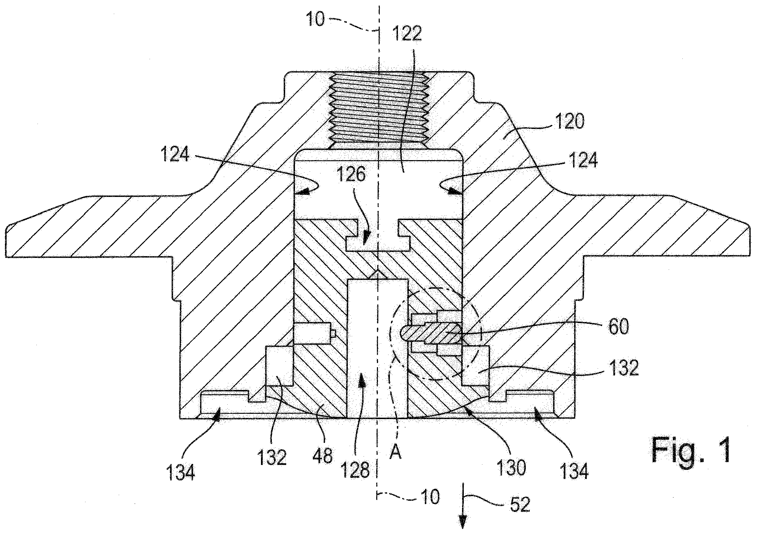

Figur 1 zeigt ein Zwischenstück 120 zur Anordnung zwischen einem Antrieb und einem Ventilkörper eines Absperrorgans in einer schematischen Schnittansicht. Das Zwischenstück 120 weist einen sich entlang einer Zustellachse 10 erstreckenden Zylinder 122 mit Innenflächen 124 auf.

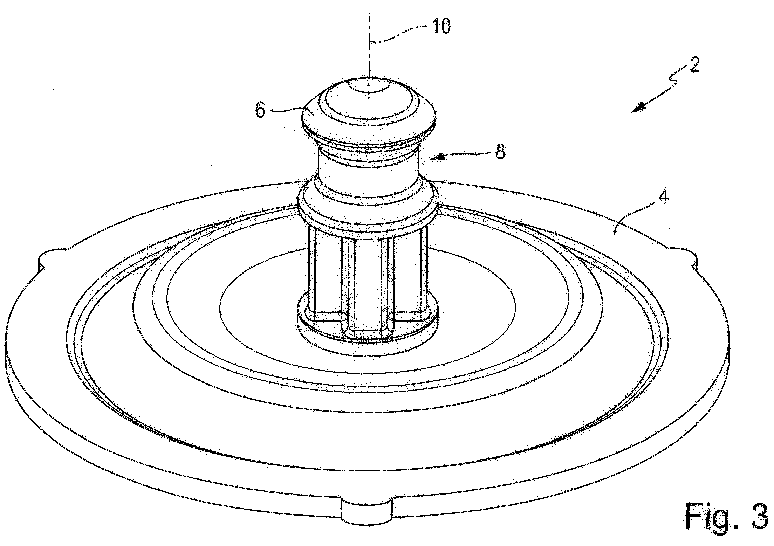

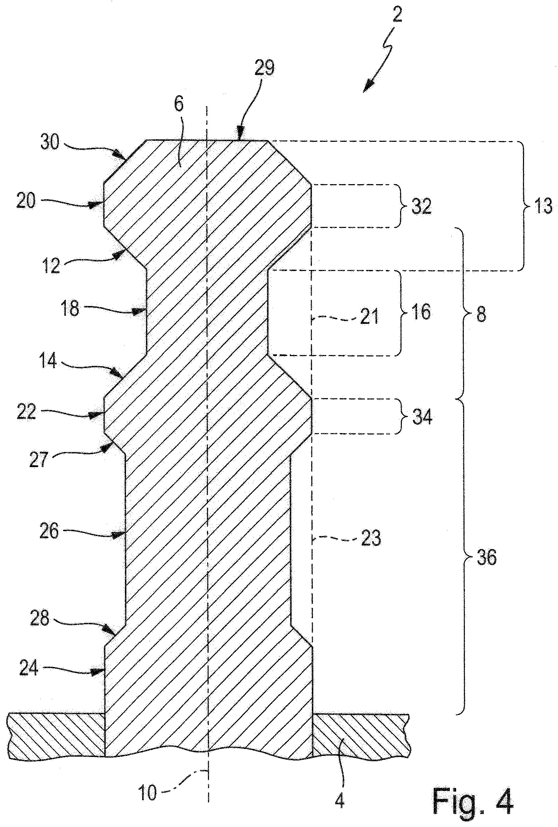

In dem Zwischenstück 120 ist ein Druckstück 48 anordenbar. Das Druckstück 48 ist bezüglich seiner Außenkonturen im Wesentlichen rotationssymmetrisch zur Zustellachse 10 ausgebildet. Eine erste Ausnehmung 126 des Druckstücks ist zur Aufnahme einer Antriebsstange vorgesehen. Eine zweite Ausnehmung 128 ist zur Aufnahme eines nachfolgend in den Figuren 3 und 4 erläuterten Verriegelungsglieds eines Verschlusselements ausgebildet. Ein Anpressbereich 130 des Druckstücks 48 ist dazu vorgesehen, eine Membran gegen einen Ventilsitz zu drücken, um damit das Absperrorgan zu verschließen.

Quer zur Zustellachse 10 weist das Druckstück 48 mehrere, bevorzugt gleich weit voneinander beabstandete Verbindungsbohrungen zwischen der Ausnehmung 128 und dem Äußeren des Druckstücks 48 auf, wobei in der Schnittansicht der Figur 1 nur eine Verbindungsbohrung gezeigt ist. In der jeweiligen Verbindungsbohrung, die unterschiedliche Innendurchmesser aufweist, ist ein Verriegelungsschieber 60 angeordnet, der in Figur 1 in einer Verriegelungsstellung zum Verriegeln des in Figur 1 nicht gezeigten Verschlusselements gezeigt ist.

Das Druckstück 48 ist in dem Zylinder 122 axial entlang der Zustellachse 10 führbar. Ausgehend von dem Zylinder 122 weist das Zwischenstück 120 in der Zustellrichtung 52 eine Ausnehmung 132 auf, die derart angeordnet ist, dass in einer Montageposition des Druckstücks 48 sich die Verriegelungsschieber 60 in die Ausnehmung 132 verlagern und damit das Verriegelungsglied freigeben. Die Montageposition wird durch eine Bewegung des Druckstücks 48 in Zustellrichtung erreicht. In Figur 1 befindet sich das Druckstück 48 bezüglich des Zwischenstücks 120 in einer Position, in der die Zylinderinnenwand 124 die Verriegelungsschieber 60 radial nach innen drückt. Wird das Druckstück 48 nun aus der in Figur 1 gezeigten Position in die Montageposition in Zustellrichtung 52 bewegt, so bewegen sich die Verriegelungsschieber 60, die mittels einer Feder mit einer radial nach außen wirkenden Kraft beaufschlagt sind, radial nach außen in die Ausnehmung 132.

Die in Figur 1 gezeigte Position des Druckstücks 48 bezüglich des Zwischenstücks 120 ist eine Schließposition des Druckstücks 48, bei der das Druckstück 48 mit einer Membran derart auf den Ventilsitz drückt, so dass das Absperrorgan verschlossen ist. Die Montageposition, die zur Freigabe des Verschlusselements dient, befindet sich in Zustellrichtung 52 nach der Schließposition. In der Montageposition ist das Verschlusselement von dem Druckstück 48 und dem Zwischenstück 120 entfernbar und ein neues Verschlusselement kann dem Druckstück 48 bzw. dem Zwischenstück 120 zugeführt und verriegelt werden.

Des Weiteren weist das Zwischenstück 120 einen Klemmbereich 134 auf, der zum Verklemmen der Membran zwischen dem Zwischenstück 120 und dem Ventilkörper ausgebildet ist.

Die Ausnehmung 132 liegt in einer Lotebene der Zustellachse und wird durch einen sich in Zustellrichtung 52 sich öffnenden Durchmessersprung des Zylinders 122 gebildet.

Selbstverständlich können die Ausnehmung 132 und das Druckstück 48 auch anders ausgestaltet sein als in der Figur 1 dargestellt. Beispielsweise kann die Ausnehmung 132 als Ringnut in der Zylinderinnenwand 122 ausgebildet sein. In dieser Ausführungsform kann beispielsweise auch das Druckstück 48 ohne den in Zustellrichtung 52 vergrößerten Anpressbereich 130, bzw. den entsprechenden Durchmessersprung des Druckstücks 48 ausgeführt sein.

In einer anderen Ausführungsform kann bei einer drehfesten Führung des Druckstücks 48 in dem Zylinder 122, d.h. dass keine oder nur eine geringe Verdrehung des Druckstücks 48 um die Zustellachse 10 möglich ist, die Ausnehmung 132 durch ein zu der Position des jeweiligen Verriegelungsschieber 60 korrespondierenden Lochs in der Zylinderinnenwand 124 gebildet werden.

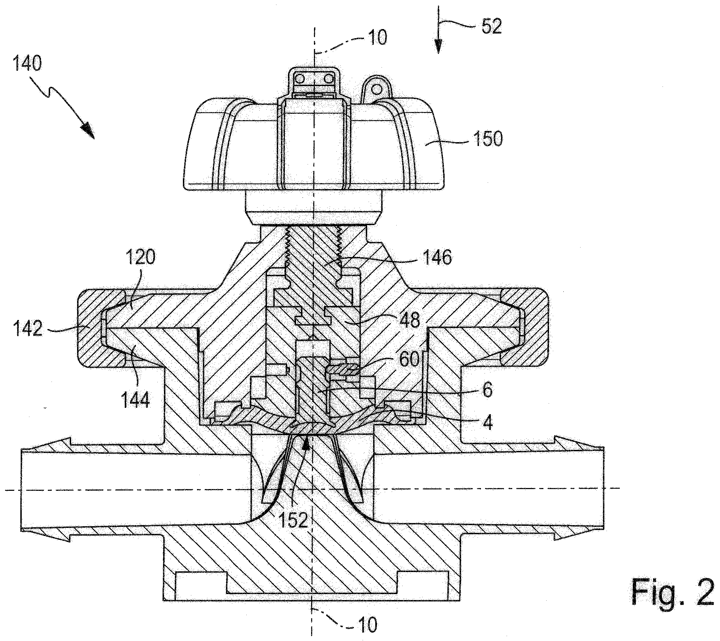

Figur 2 zeigt das Absperrorgan 140 in einer schematischen Seiten-/Schnittansicht. Das Zwischenstück 120 ist mittels einer lösbaren Klemmeinrichtung 142 mit dem Ventilkörper 144 des Absperrorgans 140 verbunden. Das Druckstück 48 kann über die Antriebsstange 146 mittels eines Handrads 150 entlang der Zustellachse 10 bewegt werden, wozu die Antriebsstange 146 ein mit einem Innengewinde des Zwischenstücks 120 zusammenwirkendes Außengewinde aufweist. Der Antrieb des Druckstücks 48 in Form der Antriebsstange 146 und des Handrads 150 ist lediglich beispielhaft und kann selbstverständlich auch durch andere Antriebsarten, insbesondere durch einen pneumatischen oder elektrischen Antrieb, ersetzt werden.

Das Absperrorgan 140 ist in Figur 2 in einer Schließstellung gezeigt, in der die Membran 4 auf einen Ventilsitz 152 drückt und das Absperrorgan 140 verschließt. Die Verriegelungsschieber 60 geben das Verriegelungsglied 6 in der Schließstellung nicht frei, womit das Verschlusselement bestehend aus dem Verriegelungsglied 6 und der Membran 4 in dem Betriebszustand des Absperrorgans 140 stets sicher verriegelt ist.

Erst durch ein Entfernen des Zwischenstücks 120 von dem Ventilkörper 144 kann das Druckstück 28 in die Montageposition überführt werden, um das Verriegelungsglied 6 freizugeben.

Figur 3 zeigt eine perspektivische Ansicht auf das Verschlusselement 2 für das Absperrorgan für Fluide. Das Verschlusselement 2 umfasst die Membran 4 und das von der Membran 4 abragendes Verriegelungsglied 6. Das Verriegelungsglied 6 ist mittig zu der Membran 4 angeordnet. Das Verriegelungsglied 6 weist einen Außendurchmesserrücksprung 8 auf. Das Verriegelungsglied 6 besteht aus einem im Wesentlichen nicht verformbaren Material, bspw. einem Metall, einer Metalllegierung oder einem Thermoplast. Insbesondere ist das Verriegelungsglied 6 bei einer Betriebstemperatur des Absperrorgans im Wesentlichen nicht verformbar. Demgegenüber ist die Membran 4 aus einem Material, das bei einer Betriebstemperatur des Absperrorgans im Wesentlichen verformbar ist, um die Membran 4 entlang der Zustellachse 10 zu bewegen. Die Membran 4 ist zu einem Zusammenwirken mit einem Ventilkörper des Absperrorgans ausgebildet.

Figur 4 zeigt eine schematische Schnittansicht durch einen Teil des Verschlusselements 2, insbesondere durch das abragende Verriegelungsglied 6. Figur 4 zeigt auch, dass das Verriegelungsglied 6 in der Membran 4 angeordnet ist, bspw. mit der Membran 4 vergossen ist. Der Außendurchmesserrücksprung 8 weist einen ersten Anschlagbereich 12 hin zu einem distalen Ende 13 des Verriegelungsgliedes 6 auf. Der Außendurchmesserrücksprung 8 weist einen zweiten Anschlagbereich 14 hin zu der Membran 4 auf. Der Anschlagbereich 12 und 14 sind über eine Distanz 16 voneinander beabstandet und damit derart voneinander beabstandet, so dass in einem Verriegelungszustand das Verschlusselement 6 und ein nachfolgend erläutertes Druckstück entlang der Zustellachse 10 zueinander bewegbar sind. Die Anschlagbereiche 12 und 14 des Außendurchmesserrücksprungs 8 des Verriegelungsglieds 6 entsprechen Kegelstumpfaußenflächen, die aufeinander zulaufen.

Der Außendurchmesserrücksprung 8 weist einen Innenführungsbereich 18 auf, der im Wesentlichen einer Zylindermantelaußenfläche entspricht, die parallel zu der Zustellachse 10 ausgerichtet ist. Des Weiteren ist das Verschlusselement 10 im Wesentlichen rotationssymmetrisch zur Zustellachse 10 ausgebildet. Die Verriegelungsschieber 60 sind in eine Verriegelungsstellung verlagerbar, in der die Verriegelungsschieber den Innenführungsbereich 18 radial von außen angreifen. Damit wird das Verriegelungsglied 6 mittels der Verriegelungsschieber zentriert, d.h. entlang der Zustellachse 10 gelagert. Damit ist der Innenführungsbereich 18 derart ausgestaltet, dass in dem Verriegelungszustand das Verschlusselement 2 und das Druckstück entlang der Zustellachse 10 zueinander bewegbar sind. Der Außendurchmesserrücksprung 8 wird umlaufend, d.h. entlang einer Umfangslinie, nicht unterbrochen. Der Außendurchmesserrücksprung 8 ist damit zur Aufnahme der Verriegelungsschieber 60 in ihrer Verriegelungsstellung vorgesehen. Das Verriegelungsglied 6 weist im Bereich des distalen Endes 13 einen ersten Außenführungsbereich 20 auf. Ein zweiter Außenführungsbereich 22 schließt sich ausgehend von dem ersten Außenführungsbereich 20 an den Außendurchmesserrücksprung 8 hin zur Membran 4 an. Ein dritter Führungsbereich 24 schließt sich hin zur Membran 4 an einen Abstandsbereich 26 an. Die Außenführungsbereiche 20, 22 und 24 weisen im Wesentlichen den gleichen Durchmesser auf, wie mit den gestrichelten Linien 21 und 23 angedeutet ist. Insbesondere ist der Außendurchmesserrücksprung 8 zwischen dem ersten Führungsbereich 20 und dem zweiten Führungsbereich 22 angeordnet. Die Außenführungsbereiche 20, 22 und 24 entsprechen im Wesentlichen Zylindermantelaußenflächen.

Der Abstandsbereich 26 verjüngt sich bezüglich der jeweiligen Außenfläche der Außenführungsbereiche 22 und 24 mittels der jeweils zum Abstandsbereich 26 hin zulaufenden Kegelstumpfmantelaußenflächen 27 und 28.

Das distale Ende 13 weist des Weiteren eine Abschlussfläche 29 und einen Einlaufbereich 30 auf. Die Außenführungsbereiche 20 und 22 sind in Zustellrichtung bzw. parallel zur Zustellachse 10 im Wesentlichen gleich groß und weisen jeweils im Wesentlichen gleiche Höhen 32 und 34 auf. Der Außendurchmesserrücksprung 8 ist über eine Distanz 36 von der Membran 4 beabstandet.

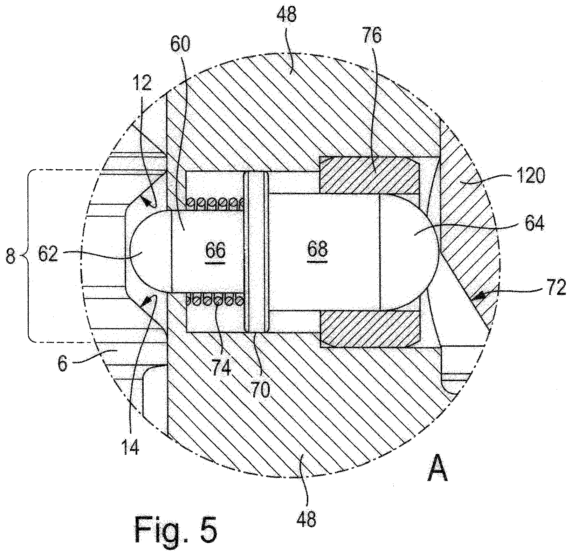

Figur 5 zeigt den Ausschnitt A aus Figur 1 mit einem verriegelten Verriegelungsglied 6. Der Verriegelungsschieber 60 befindet sich in der das Verriegelungsglied 6 verriegelnden Verriegelungsstellung. Der Verriegelungsschieber 60 ist derart in dem Druckstück 48 aufgenommen, dass der Verriegelungsschieber 60 im Wesentlichen orthogonal zur Zustellachse 10 bewegbar ist. Der Verriegelungsschieber 60 weist ein erstes abgerundetes Ende 62 und ein zweites abgerundetes Ende 64 auf. An die Enden 62 und 64 schließt sich jeweils eine Zylindermantelaußenfläche 66 und 68 an. Zwischen den Zylindermantelaußenflächen 66 und 68 befindet sich ein ringförmiger Außendurchmesservorsprung 70. Der Anschlagbereich 12 des Verriegelungsgliedes 6 ist für das erste Ende 62 des Verriegelungsschiebers 60 vorgesehen. Ein Einlaufbereich 72 des Zylinders 122 des Zwischenstücks 120 ist für das zweite Ende 64 des Verriegelungsschiebers 60 vorgesehen. Der Einlaufbereich 72 entspricht im Wesentlichen einer entgegen der Zustellrichtung 52 zulaufenden Kegelstumpfmantelinnenfläche. Der Einlaufbereich 72 ist Teil der Ausnehmung 132.

Orthogonal zur Zustellachse 10 ist der Verriegelungsschieber 60 verliersicher gelagert. Ein Federelement 74 ist zwischen dem Druckstück 48 und dem ringförmigen Außendurchmesservorsprung 70 derart angeordnet, dass der Verriegelungsschieber 60 stets mit einer Kraft beaufschlagt wird, die bzgl. der Zustellachse 10 radial nach außen wirkt, um bei einem freigegebenen zweiten Ende 64 den Verriegelungsschieber 60 in eine Entriegelungsstellung zu verlagern. Der Verriegelungsschieber 60 ist orthogonal zur Zustellachse 10 größer als eine Mantelstärke des Druckstücks 48 im Bereich des Verriegelungsschiebers 60. Mittels eines mit einer Presspassung in das Druckstück 48 eingebrachten Ringkörpers 76 wird der Verriegelungsschieber 60 verliersicher in dem Druckstück 48 gelagert. Der Außendurchmesserrücksprung 8 des Verriegelungsgliedes 6 ist derart ausgestaltet, so dass das Verschlusselement 2 mittels der dem Außendurchmesserrücksprung 8 im Wesentlichen orthogonal zu der Zustellachse 10 zuführbaren Verriegelungsschiebern 60 verriegelbar ist.

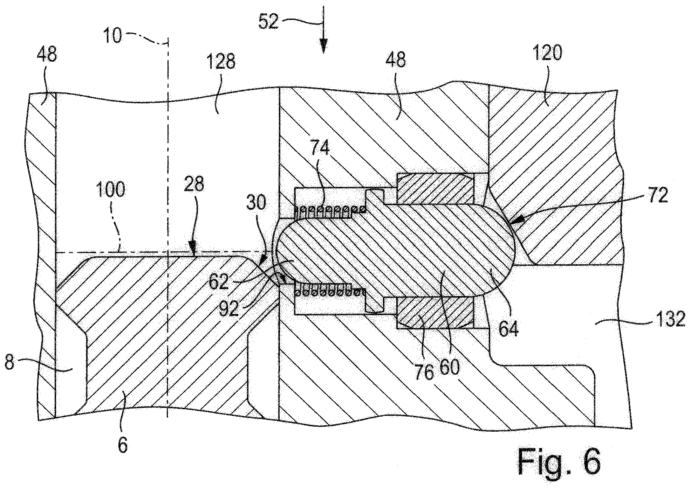

Figur 6 zeigt eine schematische Schnittansicht eines Teils des Absperrorgans 140 in einem Montageschritt, wobei sich das Druckstück 48 bereits in einer Montageposition bezüglich des Zwischenstücks 120 befindet. Das Verriegelungsglied 6 ist freigegeben, wodurch das Verschlusselement in Zustellrichtung 52 entfernbar ist. Das distale Ende 13 weist den kegelstumpfförmigen Einlaufbereich 30 auf, der in einer bevorzugten Ausführung während der Montage und während eines Betriebs von dem Verriegelungsschieber 60 nicht berührt wird. Hierzu ist das distale Ende 13 im Bereich des Einlaufbereichs 30 nicht zylinderförmig sondern kegelstumpfartig ausgebildet, was einer Ausnehmung entspricht, die einen Bereich für das erste Ende 62 des Verriegelungsschiebers 60 freilässt. Das Zwischenstück 120 weist den Einlaufbereich 72 auf, der einen Bereich für das zweite Ende 64 des Verriegelungsschiebers freigibt. Eine Lagerung für den Verriegelungsschieber 60 ist derart ausgebildet, dass sich der Verriegelungsschieber 60 entlang der Verlagerungsachse 100 bewegen kann.

Während der Montage ist in dem in Figur 6 gezeigten Montageschritt das Druckstück 48 zu dem Zwischenstück 44 in der Montageposition. Die Montageposition kann nur erreicht werden, nachdem das Zwischenstück 120 von dem Ventilkörper 144 entfernt wurde. Entsprechend ist die Membran 4 nicht mehr zwischen dem Zwischenstück 120 und dem Ventilkörper 144 eingeklemmt. In dem in Figur 6 gezeigten Montageschritt wird das Druckstück 48 in Zustellrichtung 52 über die Schließposition des Druckstücks 48 hinaus in die Montageposition bewegt. Dadurch, dass das Federelement 64 den Verriegelungsschieber 60 bzgl. der Zustellachse 10 radial nach außen drückt, drückt das zweite Ende 64 im gezeigten Zustand auf den Einlaufbereich 72. Gleichzeitig taucht das erste Ende 62 des Verriegelungsschiebers 60 in die Öffnung 92 ein. Bei einer weiteren Bewegung des Druckstücks 48 in Zustellrichtung 52 taucht der Verriegelungsschieber 60 weiter in die Ausnehmung 132 ein.

Damit sind das distale Ende 13 des Verriegelungsglieds 6, das Zwischenstück 120 und eine Lagerung für den Verriegelungsschieber 60 derart aufeinander abgestimmt, so dass der Verriegelungsschieber 60 bei einem von dem Ventilkörper 144 entferntem Zwischenstück 120 und in der Montageposition des Druckstücks 48sich aus der Ausnehmung 128 zurückzieht und gleichzeitig und/oder nachfolgend in die Ausnehmung 132 eintaucht.

Zu einer Montage eines neuen Verschlusselements wird das Druckstück durch den Antrieb in die Montageposition gefahren. Anschließend wird im Falle eines zu tauschenden Verschlusselements 2 das alte Verschlusselement 2 entfernt. Das neue Verschlusselements 2 wird mit seinem Verriegelungselement 6 in die Ausnehmung 128 des Druckstücks 48 eingeführt. Anschließend wird das Druckstück 48 mittels der Antriebsstange 146 in eine Position entgegen der Zustellrichtung gefahren, in der sich die Verlagerungsachse 100 im Bereich des Außendurchmesserrücksprungs 8 des Verriegelungsglieds 6 befindet. Damit werden die Verriegelungsschieber 60 in die in den Außendurchmesserrücksprung 8 eingreifende Verriegelungsstellung verlagert.

## Patentansprüche

1. Zwischenstück (120) und Druckstück (48) für ein Absperrorgan (140), insbesondere ein Membranventil, für Fluide, wobei das Zwischenstück (120) mit einem zugeordneten Ventilkörper (144) verbindbar ist, wobei das Druckstück (48) in dem Zwischenstück (120) anordenbar ist, **dadurch gekennzeichnet dass** das Druckstück (48) wenigstens zwei Verriegelungsschieber (60) zu einem Verriegeln eines Verriegelungsglieds (6) eines Verschlusselements (2) aufweist, wobei das Zwischenstück (120) einen Zylinder (122) aufweist, in dem das Druckstück (48) axial führbar ist, wobei der Zylinder (122) eine Ausnehmung (132) aufweist, die derart angeordnet ist, dass in einer Montageposition des Druckstücks (48) sich die Verriegelungsschieber (60) in die Ausnehmung (132) verlagern und damit das Verriegelungsglied (6) freigeben, und wobei die Ausnehmung (132) derart angeordnet und ausgestaltet ist, dass das Druckstück (48) nur dann in die Montageposition überführbar ist, wenn das Zwischenstück (120) nicht zu einem Betrieb des Absperrorgans (140) mit einem zugeordneten Ventilkörper (144) verbunden ist.

2. Zwischenstück (120) und Druckstück (48) nach Anspruch 1, wobei die Montageposition des Druckstücks (48) sich auf der Zustellachse (10) befindet.

3. Zwischenstück (120) und Druckstück (48) nach Anspruch 1 oder 2, wobei die Montageposition des Druckstücks (48) sich in einer Zustellrichtung (52) nach einer Schließposition des Druckstücks (48) befindet.

4. Zwischenstück (120) und Druckstück (48) nach einem der vorstehenden Ansprüche, wobei das Verschlusselement (2) in der Montageposition von dem Druckstück (48) und dem Zwischenstück (120) entfernbar ist.

5. Zwischenstück (120) und Druckstück (48) nach einem der vorstehenden Ansprüche, wobei die Ausnehmung (132) derart angeordnet und ausgestaltet ist, dass sich die Verriegelungsschieber (60) in einem Betriebszustand des Absperrorgans (140) nicht in die Ausnehmung (132) und sich damit nicht in eine das Verriegelungsglied (6) freigebende Entriegelungsstellung verlagern können.

6. Zwischenstück (120) und Druckstück (48) nach einem der vorstehenden Ansprüche, wobei die Ausnehmung (132) in einer Lotebene einer Zustellachse (10) liegt.

7. Zwischenstück (120) und Druckstück (48) nach einem der vorstehenden Ansprüche, wobei die Ausnehmung (132) eine Ringnut in einer Zylinderwand (124) des Zylinders (122) ist.

8. Zwischenstück (120) und Druckstück (48) nach einem der Ansprüche 1 bis 6, wobei die Ausnehmung (132) durch einen in eine Zustellrichtung (52) sich öffnenden Durchmessersprung gebildet ist.

9. Zwischenstück (120) und Druckstück (48) nach einem der vorstehenden Ansprüche, wobei der Zylinder (122) eine Zylinderwand (124) aufweist, mittels derer die Verriegelungsschieber (60) in eine das Verriegelungsglied (6) des Verschlusselements (2) ergreifende Verriegelungsstellung verlagerbar sind.

10. Absperrorgan (140) umfassend das Zwischenstück (120) und das Druckstück (48) nach einem der vorstehenden Ansprüche.

11. Absperrorgan (140) nach dem vorstehenden Anspruch umfassend einen Antrieb, insbesondere ein Handrad (150), für das Druckstück (48).

## Claims

1. Intermediate piece (120) and pressure piece (48) for a shut-off valve (140), in particular a membrane valve, for fluids, it being possible to connect the intermediate piece (120) to an assigned valve body (144), it being possible to arrange the pressure piece (48) inside the intermediate piece (120), **characterized in that** the pressure piece (48) comprises at least two locking slides (60) for locking a locking member (6) of a locking element (2), the intermediate piece (120) comprising a cylinder (122) in which the pressure piece (48) can be axially guided, the cylinder (122) comprising a recess (132) that is arranged such that, in an assembly position of the pressure piece (48), the locking slides (60) shift into the recess (132) and thereby release the locking member (6), and the recess (132) being arranged and formed such that the pressure piece (48) can only be moved into the assembly position when the intermediate piece (120) is not connected to an assigned valve body (144) in order to operate the shut-off valve (140).

2. Intermediate piece (120) and pressure piece (48) according to claim 1, wherein the assembly position of the pressure piece (48) is located on the feed axis (10).

3. Intermediate piece (120) and pressure piece (48) according to claim 1 or claim 2, wherein the assembly position of the pressure piece (48) is located downstream of a closed position of the pressure piece (48) in a feed direction (52).

4. Intermediate piece (120) and pressure piece (48) according to any of the preceding claims, wherein the locking element (2) can be removed from the pressure piece (48) and the intermediate piece (120) in the assembly position.

5. Intermediate piece (120) and pressure piece (48) according to any of the preceding claims, wherein the recess (132) is arranged and formed such that the locking slides (60) cannot shift into the recess (132) in an operative state of the shut-off valve (140) and thus cannot move into an unlocking position that releases the locking member (6).

6. Intermediate piece (120) and pressure piece (48) according to any of the preceding claims, wherein the recess (132) is in a vertical plane of a feed axis (10).

7. Intermediate piece (120) and pressure piece (48) according to any of the preceding claims, wherein the recess (132) is an annular groove in a cylinder wall (124) of the cylinder (122).

8. Intermediate piece (120) and pressure piece (48) according to any of claims 1 to 6, wherein the recess (132) is formed by an increase in diameter that opens in a feed direction (52).

9. Intermediate piece (120) and pressure piece (48) according to any of the preceding claims, wherein the cylinder (122) comprises a cylinder wall (124) by means of which the locking slides (60) can be moved into a locking position that grips the locking member (6) of the locking element (2).

10. Shut-off valve (140) comprising the intermediate piece (120) and the pressure piece (48) according to any of the preceding claims.

11. Shut-off valve (140) according to the preceding claim, comprising a drive, in particular a handwheel (150), for the pressure piece (48).

## Revendications

1. Pièce intermédiaire (120) et pièce de pression (48) pour un organe d'arrêt (140), plus particulièrement une vanne à membrane, pour des fluides, la pièce intermédiaire (120) pouvant être reliée avec un corps de vanne (144) correspondant, la pièce de pression (48) pouvant être disposée dans la pièce intermédiaire (120), **caractérisée en ce que**
la pièce de pression (48) comprend au moins deux coulisseaux de verrouillage (60) pour un verrouillage d'un organe de verrouillage (6) d'un élément de fermeture (2), la pièce intermédiaire (120) comprenant un cylindre (122), dans lequel la pièce de pression (48) peut être guidée axialement, le cylindre (122) comprenant un évidement (132), qui est disposée de façon à ce que, dans une position de montage de la pièce de pression (48), les coulisseaux de verrouillage (60) se déplacent dans l'évidement (132) et libèrent ainsi l'organe de verrouillage (6) et l'évidement (132) étant disposé et conçu de façon à ce que la pièce de pression (48) ne puisse être mise dans la position de montage que lorsque la pièce intermédiaire (120) n'est pas reliée avec un corps de vanne (144) correspondant pour un fonctionnement de l'organe d'arrêt (140).

2. Pièce intermédiaire (120) et pièce de pression (48) selon la revendication 1, la position de montage de la pièce de pression (48) se trouvant sur l'axe d'approche (10).

3. Pièce intermédiaire (120) et pièce de pression (48) selon la revendication 1 ou 2, la position de montage de la pièce de pression (48) se trouvant dans une direction d'approche (52) après une position de fermeture de la pièce de pression (48).

4. Pièce intermédiaire (120) et pièce de pression (48) selon l'une des revendications précédentes, l'élément de fermeture (2) pouvant être retiré de la pièce de pression (48) et de la pièce intermédiaire (120) dans la position de montage.

5. Pièce intermédiaire (120) et pièce de pression (48) selon l'une des revendications précédentes, l'évidement (132) étant disposé et conçu de façon à ce que les coulisseaux de verrouillage (60), dans un état de fonctionnement de l'organe d'arrêt (140), ne puissent pas se déplacer vers l'évidement (132) et ne puissent donc pas se déplacer vers une position de déverrouillage libérant l'organe de verrouillage (6).

6. Pièce intermédiaire (120) et pièce de pression (48) selon l'une des revendications précédentes, l'évidement (132) se trouvant dans un plan vertical d'un axe d'approche (10).

7. Pièce intermédiaire (120) et pièce de pression (48) selon l'une des revendications précédentes, l'évidement (132) étant une rainure annulaire dans une paroi cylindrique (124) du cylindre (122).

8. Pièce intermédiaire (120) et pièce de pression (48) selon l'une des revendications 1 à 6, l'évidement (132) étant constitué d'un saut de diamètre s'ouvrant dans une direction d'approche (52).

9. Pièce intermédiaire (120) et pièce de pression (48) selon l'une des revendications précédentes, le cylindre (122) comprenant une paroi cylindrique (124) permettant de déplacer les coulisseaux de verrouillage (60) vers une position de verrouillage en prise avec l'organe de verrouillage (6) de l'élément de fermeture (2).

10. Organe d'arrêt (140) comprenant la pièce intermédiaire (120) et la pièce de pression (48) selon l'une des revendications précédentes.

11. Organe d'arrêt (140) selon la revendication précédente, comprenant un dispositif d'entraînement, plus particulièrement un volant (150), pour la pièce de pression (48).
